# EUROPEAN PATENT APPLICATION

(11) **EP 4 738 530 A1**
(43) Date of publication of application: **06.05.2026**
(21) Application number: 24210661.5
(22) Date of filing: 04.11.2024
(51) Int. Cl.: H01M 10/613, H01M 10/647

(54) **BATTERY CELL FOR A BATTERY PACK OF A VEHICLE, VEHICLE, AND METHOD FOR MANUFACTURING A BATTERY CELL FOR A BATTERY PACK OF A VEHICLE**

(71) Applicant: Volvo Car Corporation, 405 31 Göteborg (SE)
(72) Inventor: KARLSSON, Daniel, 40531 Göteborg (SE); PERSSON, Klas, 40531 Göteborg (SE)
(74) Representative: Kransell & Wennborg KB

(57) **Abstract**

The disclosure relates to a battery cell (14) for a battery pack of a vehicle. The battery cell (14) comprises a chemically active portion (20) comprising an anode, a cathode, and a separator. Moreover, the battery cell (14) comprises an enclosure (18), wherein the chemically active portion (20) is arranged inside the enclosure (18). Furthermore, the battery cell (14) comprises at least one thermally conductive bridge element (36) thermally coupled to the chemically active portion (20) and the enclosure (18) such that the thermally conductive bridge element (36) may transfer heat from the chemically active portion (20) to the enclosure (18). The disclosure is also directed to a vehicle comprising the battery cell (14) and to a method for manufacturing the battery cell (14) for the battery pack of the vehicle.

## Description

### TECHNICAL FIELD

The present disclosure relates to a battery cell for a battery pack of a vehicle.

The present disclosure also relates to a vehicle comprising the battery cell for a battery pack of the vehicle.

Moreover, the disclosure is directed to a method for manufacturing a battery cell for a battery pack of a vehicle.

### BACKGROUND ART

A battery pack for a vehicle may comprise a plurality of battery cells. During charging or discharging, the battery cells of the battery pack heat up due to chemical conversion processes in their chemically active portions.

Accumulated heat may however damage the battery cells or at least cause premature ageing of the chemically active portions of the battery cells.

Thus, being able to efficiently transfer heat generated inside the chemically active portion of a battery cell to an outside of the battery cell is paramount in maintaining a high level of health of the battery pack for a long period of time during usage of the battery pack.

### SUMMARY

It is therefore an objective of the present disclosure to provide a battery cell that has improved heat dissipating capacities.

The problem is at least partially solved or alleviated by the subject matter of the independent claims of the present disclosure, wherein further examples are incorporated in the dependent claims.

According to a first aspect, there is provided a battery cell for a battery pack of a SE:TOP

vehicle. The battery cell comprises:
- a chemically active portion comprising an anode, a cathode and a separator,
- an enclosure, wherein the chemically active portion is arranged inside the enclosure, and
- at least one thermally conductive bridge element thermally coupled to the chemically active portion and the enclosure such that the thermally conductive bridge element may transfer heat from the chemically active portion to the enclosure.

The chemically active portion allows storing electric energy in chemical form. This means that during charging of the battery cell, electric energy is converted into chemical energy in the chemically active portion with the help of an electrolyte. During discharging of the battery cell, chemical energy stored in the chemically active portion is converted back to electric energy, again with the help of the electrolyte. The anode and the cathode of the chemically active portion each are electrically connectable to an electric terminal or pole of the battery cell arranged on an outside of the enclosure of the battery cell. Thus, charging the battery cell is accomplished by applying an electric voltage across the poles of the battery cell connected to the anode and cathode, respectively. Discharging the battery cell is accomplished by connecting the poles of the battery cell in an electric circuit outside the battery cell. Since the chemically active portion is arranged inside the enclosure, the enclosure provides protection to the chemically active portion from environmental influences, such as mechanical impact and/or environmental media. Additionally, the enclosure holds electrolyte within the battery cell and prevents it from leaking to an environment. The enclosure may be flexible, e.g. in the form of a bag, or rigid, e.g. in the form of a can, particularly a metal can. In the present configuration, the chemically conductive bridge element is thermally coupled to both the chemically active portion and to the enclosure. This way, heat generated within the chemically active portion during charging or discharging may efficiently be transferred to the enclosure of the battery cell and from there to an outside of the battery pack comprising the battery cell. In other words, the battery cell of the battery pack may be efficiently and effectively cooled. Cooling of the battery cell is of particular importance if the battery pack constitutes a traction battery of the vehicle. This is due to high power supply to the battery cells of the traction battery during charging of the traction battery and due to high power drain from the battery cells of the traction battery while driving, especially while accelerating, the vehicle. Efficient and effective cooling enhances the performance of the battery cell and/or improves ageing properties of the battery cell.

In an example, the chemically active portion may be provided as a stack of the anode, the separator and the cathode. The stack may comprise multiple layers of the anode, the separator and the cathode. Such chemically active portions may be used in so-called prismatic battery cells, in so-called pouch battery cells, and/or in so-called blade battery cells. In another example, the chemically active portion may be provided as a wound assembly of the anode, the separator and the cathode. The wound assembly of the chemically active portion may comprise a substantially cylindrical shape having a substantially circular base area. Such chemically active portions may be used in so-called cylindrical battery cells. Alternatively, the wound assembly may comprise a substantially oval or even flat shape. Such chemically active portions may be used in so-called prismatic battery cells, in so-called pouch battery cells, and/or in so-called blade battery cells. In this context, a blade battery cell is substantially shaped as a prismatic battery cell. However, a blade battery cell usually is configured to extend substantially over a full width of a battery pack comprising the battery cell, whereas a plurality of prismatic battery cells are usually needed to cover the full width of the battery pack. In an example, four rows of prismatic battery cells are used to cover the full width of the battery pack. Blade battery cells have the advantage of an increased volumetric efficiency, i.e. storable electric energy per unit volume. This applies in particular in comparison to prismatic battery cells and is mainly due to the fact that less space is occupied by enclosures when using blade battery cells

It is noted that due to the fact that thermal management in blade battery cells usually is more difficult than in other types of battery cells, the present disclosure may be particularly advantageous when used in blade battery cells.

In an example, the at least one thermally conductive bridge element is mechanically connected to the chemically active portion and/or to the enclosure. This is to be understood in that the thermally conductive bridge element is affixed to the chemically active portion and/or to the enclosure. In particular, the thermally conductive bridge element may be welded, bonded and/or glued to the chemically active portion and/or to the enclosure. Alternatively, the thermally conductive bridge element may be integrally formed with a component of the chemically active portion or with the enclosure. The mechanical connection between the thermally conductive bridge element and the chemically active portion and/or the enclosure ensures a strong and particularly reliable thermal coupling between the thermally conductive bridge element and the chemically active portion and/or the enclosure. Thus, heat dissipation from the chemically active portion to the enclosure is further improved. Moreover, mechanically connecting the thermally conductive bridge element to the chemically active portion and/or to the enclosure facilitates manufacturing of the battery cell.

In an example, the thermally conductive bridge element has the form of an elongated bar. An elongated bar is to be understood as a solid component having two dimensions which are comparatively small in relation to a third dimension. Often, the third dimension is designated as the length of the component, wherein the two smaller dimensions are referred to as the width and height of the component. The fact that the thermally conductive bridge element has the form of an elongated bar allows to arrange the thermally conductive bridge element in restraint spaces inside the battery cell. Still, mainly due to the comparative long third dimension, the thermally conductive bridge element may offer sufficiently large heat transfer interfaces. Altogether, an effective and efficient heat transfer from the chemically active portion to an outside surface of the battery pack can be provided.

In an example, the thermally conductive bridge element extends over at least 80% of a length of the chemically active portion. This means that a large portion of the length of the chemically active portion is thermally coupled to the enclosure via the thermally conductive bridge element. This contributes to a large thermal contact area between the chemically active portion and the thermally conductive bridge element. This way, an efficient and effective heat transfer from the chemically active portion to the thermally conductive bridge element is fostered.

In an example, the thermally conductive bridge element extends over at least 80% of a length of the enclosure. This means that a large portion of the length of the enclosure is thermally coupled to the chemically active portion via the thermally conductive bridge element. This contributes to a large thermal contact area between the enclosure and the thermally conductive bridge element. This way, an efficient heat transfer from the thermally conductive bridge element to the enclosure is fostered.

In an example, a surface of the thermally conductive bridge element contacting the chemically active portion is substantially flat or concave. A substantially flat contact surface of the thermally conductive bridge element comprises substantially no curvature. A substantially concave contact surface of the thermally conductive bridge element comprises a curvature of the contact surface towards an inside of the thermally conductive bridge element. The substantially flat surface of the thermally conductive bridge element contacting the chemically active portion may be used if the chemically active portion is provided as a stack of the anode, the separator and the cathode. Thus, the contact surface of the thermally conductive bridge element and the chemically active portion match with each other, thereby ensuring a good thermal contact. The substantially concave surface of the thermally conductive bridge element contacting the chemically active portion may be used in connection with a wound chemically active portion, thereby ensuring a good thermal contact. Also in this case, at least one side of the chemically active portion matches with a contact surface of the thermally conductive bridge element. Matching contact surfaces have the effect that there is no thermal gap created between the chemically active portion and the thermally conductive bridge element. This ensures an efficient heat transfer from the chemically active portion to the thermally conductive bridge element.

In an example, the enclosure has a prismatic shape having a substantially rectangular cross-section. The substantially rectangular cross-section comprises two longer sides being opposed to each other and two shorter sides being opposed to each other. The at least one thermally conductive bridge element is thermally coupled to the enclosure on at least one of the two shorter sides of the substantially rectangular cross-section. The enclosure having a prismatic shape having a substantially rectangular cross-section allows to house the chemically active portion in a volumetrically efficient manner. This particularly applies to the outlined cases of the chemically active portion being provided as a flat stacking or as a wound assembly. This configuration is advantageous since usually, the battery cells in a battery pack or battery assembly contact neighboring battery cells via the two longer sides of the cross sections. Consequently, the fact that the thermally conductive bridge elements contacts one of the two shorter sides of the cross section facilitates heat transfer towards an outside or towards an environment since on this side, usually no further battery cells are provided in a battery pack or battery assembly.

In an example, the battery cell comprises at least two thermally conductive bridge elements. Each thermally conductive bridge element is thermally coupled to the enclosure and to the chemically active portion. The at least two thermally conductive bridge elements may be thermally coupled to a same side of the chemically active portion and to a same side of the enclosure. Alternatively, the at least two thermally conductive bridge elements may be thermally coupled to different sides of the chemically active portion and to different sides of the enclosure. Two or more thermally conductive bridge elements may enhance the heat transfer capacity as compared to one thermally conductive bridge element.

In an example, the at least two thermally conductive bridge elements are arranged at opposite ends of the chemically active portion. At the same time, the at least two thermally conductive bridge elements are arranged at opposite internal sides of the enclosure. This allows for an efficient and effective transfer of heat from the chemically active portion towards the enclosure. Moreover, this configuration may provide for an efficient fixation of the chemically active portion within the enclosure since the chemically active portion may be mechanically clamped between opposite sides of the enclosure.

In an example, the at least two thermally conductive bridge elements are arranged at opposite shorter sides of the substantially oval or oblong circumference of the chemically active portion. At the same time, the at least two thermally conductive bridge elements may be arranged at opposite shorter sides of the substantially rectangular cross-section of the enclosure. This has the effect that when multiple battery cells are arranged side by side in a battery pack such that they contact each other at the longer sides of the substantially rectangular cross-section of their enclosures, an efficient heat transfer from the chemically active portion to an outside surface of the battery pack can still be provided via a heat conduction path between the shorter side of the substantially oval or oblong circumference of the chemically active portion of the battery cell and the shorter side of the substantially rectangular cross-section of the enclosure of the battery cell.

In an example, the at least one thermally conductive bridge element comprises a mounting slope on at least one end. The mounting slope may comprise a mounting chamfer and/or a mounting radius. In more general terms, the mounting slope may be referred to as mounting portion. The mounting slope may facilitate an insertion of the at least one thermally conductive bridge element into the enclosure. This may be particularly relevant in case the at least one thermally conductive bridge element is mechanically clamped in between the chemically active portion and the enclosure due to limited space for inserting the at least one thermally conductive bridge element.

In an example, the mounting slope on at least one end of the at least one thermally conductive bridge element is located adjacent to a side of the at least one thermally conductive bridge element contacting the enclosure. This particularly facilitates manufacturing of the battery cell in case the at least one thermally conductive bridge element is inserted into the enclosure together with the chemically active portion. Specifically, if the thermally conductive bridge element is mechanically connected to the outer circumference of the chemically active portion prior to an insertion into the enclosure, the mounting slope facilitates the insertion process of an assembly of the chemically active portion and the at least one thermally conductive bridge element.

In an example, the mounting slope on at least one end of the at least one thermally conductive bridge element is located adjacent to a side of the at least one thermally conductive bridge element contacting the chemically active portion. This particularly facilitates manufacturing of the battery cell in case the at least one thermally conductive bridge element is inserted into the enclosure prior to an insertion of the chemically active portion. Specifically, if the thermally conductive bridge element is mechanically connected to the inner side of the enclosure prior to an insertion of the chemically active portion into the enclosure, the mounting slope facilitates the insertion process of the chemically active portion.

In an example, the mounting slope on at least one end of the at least one thermally conductive bridge element is located adjacent to both a side of the at least one thermally conductive bridge element contacting the enclosure and a side of the at least one thermally conductive bridge element contacting the chemically active portion. This particularly facilitates manufacturing of the battery cell in case the at least one thermally conductive bridge element is inserted into the enclosure after an insertion of the chemically active portion into the enclosure. In other words, in this case, the chemically active portion is inserted into the enclosure first. Subsequently, the at least one thermally conductive bridge element is inserted in at least one gap between the chemically active portion and the enclosure.

In an example, the at least one thermally conductive bridge element comprises an electrolyte guiding feature. In this context, an electrolyte guiding feature is a feature of the thermally conductive bridge element that facilitates a transfer of electrolyte from one portion, e.g. one end, of the thermally conductive bridge element to another portion, e.g. another end, of the thermally conductive bridge element. Thus, due to the electrolyte guiding feature, a flow of electrolyte is less impeded than without such an electrolyte guiding feature. Thus, the electrolyte guiding feature maintains possibilities of a flow of electrolyte within the battery cell and promotes a uniform distribution of electrolyte within the battery cell, particularly along a length direction of the battery cell.

In an example, the electrolyte guiding feature comprises a groove arranged on an outer side of the thermally conductive bridge element and/or a channel extending through an interior of the thermally conductive bridge element. The groove arranged on an outer side of the at least one thermally conductive bridge element creates a channel for a flow of electrolyte between the at least one thermally conductive bridge element and the enclosure or the chemically active portion, respectively. The channel extending through an interior of the at least one thermally conductive bridge element is essentially a cavity extending through the at least one thermally conductive bridge element. The channel itself constitutes a flow path for electrolyte within the battery cell. Thus, the groove arranged on an outer side of the thermally conductive bridge element and/or the channel extending through the interior of the thermally conductive bridge element maintains possibilities of a flow of electrolyte within the battery cell and promotes a uniform distribution of electrolyte within the battery cell, particularly along the length direction of the battery cell.

In an example, the thermally conductive bridge element comprises a porous structure configured to hold and/or guide an electrolyte. The porous structure of the thermally conductive bridge element may suck up excess electrolyte that is not being used within the chemically active portion of the battery cell. In case electrolyte is used up over time, e.g. evaporates, in the chemically active portion, the porous structure of the thermally conductive bridge element may dispense electrolyte to the chemically active portion. Thus, the porous structure of the thermally conductive bridge element may serve as a storage of reserve electrolyte within the battery cell. This ensures that the chemically active portion is provided with enough electrolyte to make full use of its electric storage capacity over a long lifetime of the battery cell. The porous structure of the thermally conductive bridge element may also guide an electrolyte in the sense that it provides flow paths for the electrolyte within the battery cell. This creates possibilities of a flow of electrode within the battery cell and promotes a uniform distribution of electrolyte within the battery cell, particularly along the length direction of the battery cell.

In an example, the at least one thermally conductive bridge element comprises a thermally conductive polymer material. As thermally conductive polymer material, particularly polyphenylene sulfide (PPS) or polyether ether ketone (PEEK) may be used. These polymers exhibit decent thermal conductivity properties while at the same time showing excellent chemical resistance, especially against the electrolyte within the battery cell. Alternatively, doped polymer materials may be used as thermally conductive polymer material. Doped polymer materials are understood as a compound of a base polymer and a filler material. In particular, the base polymer of such a polymer compound may comprise excellent chemical resistance, especially against the electrolyte within the battery cell. The filler material may enhance thermal conductivity properties of the compound.

According to a second aspect, there is provided a vehicle comprising a battery cell of the first aspect. Specifically, the battery cell of the first aspect may form part of a battery pack of the vehicle. More specifically, the battery pack may be a traction battery pack of the vehicle. A chemically conductive bridge element is thermally coupled to both a chemically active portion and an enclosure of the battery cell. This way, heat generated within the chemically active portion during charging or discharging of the battery cell may efficiently be dissipated to the enclosure of the battery cell and from there to an outside of the battery pack comprising the battery cell. In other words, the battery cell of the battery pack may be efficiently cooled. Cooling of the battery cell is of particular importance if the battery pack constitutes a traction battery of the vehicle. This is due to the high-power supply to the battery cells of the traction battery during charging and due to the high-power drain from the battery cells of the traction battery while driving, especially while accelerating, the vehicle. Thus, providing a vehicle comprising a battery cell of the first aspect allows a high charging power of the battery pack of the vehicle and a high-power drain of the battery pack, especially while accelerating the vehicle, without surpassing an allowable temperature threshold of the battery cell and or the battery pack of the vehicle.

According to a third aspect, there is provided a method for manufacturing a battery cell of the first aspect for a battery pack of a vehicle. The method comprises:
- providing the chemically active portion, mechanically connecting the at least one thermally conductive bridge element to the chemically active portion and, subsequently, arranging the chemically active portion together with the at least one thermally conductive bridge element in the enclosure, or
- providing the enclosure, mechanically connecting the at least one thermally conductive bridge element to the enclosure and, subsequently, arranging the chemically active portion in the enclosure, or
- providing the enclosure, arranging the chemically active portion in the enclosure, and, subsequently, inserting the at least one thermally conductive bridge element in a gap between the enclosure and the chemically active portion.

Mechanically connecting the at least one thermally conductive bridge element to the chemically active portion or to the enclosure may be accomplished by welding, bonding and/or gluing. These are reliable methods of creating a durable mechanical connection between the thermally conductive bridge element and the chemically active portion or the enclosure, respectively.

In a further alternative, the method of the third aspect comprises providing the enclosure, arranging the chemically active portion in the enclosure and, subsequently, inserting the at least one thermally conductive bridge element in a gap between the enclosure and the chemically active portion.

All three alternatives of the method result in a battery cell for a battery pack of a vehicle having improved heat dissipating capabilities from the chemically active portion to the enclosure of the battery cell. In other words, the battery cell of the battery pack of the vehicle may be efficiently cooled. Cooling of the battery cell is of particular importance if the battery pack constitutes a traction battery of the vehicle. This is due to the high-power supply to the battery cells of the traction battery during charging and due to the high-power drain from the battery cells of the traction battery while driving, especially while accelerating, the vehicle. Thus, providing a vehicle comprising a battery cell of the first aspect allows a high charging power of the battery pack of the vehicle and a high-power drain of the battery pack, especially during accelerating the vehicle, without surpassing allowable temperature threshold of the battery cell and or the battery pack of the vehicle.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a battery cell according to the present disclosure for a battery pack of the vehicle,
- Figure 2: shows the battery pack of the vehicle of Figure 1 in a perspective view,
- Figure 3: shows an isolated battery cell of the battery pack of Figure 2, wherein a portion of the enclosure is represented in transparent form,
- Figure 4: shows a detailed view of a first end of the battery cell of Figure 3,
- Figure 5: shows steps of a first alternative of a method according to the present disclosure for manufacturing the battery cell according to the present disclosure, and
- Figure 6: shows steps of a second alternative of a method according to the present disclosure for manufacturing the battery cell according to the present disclosure.

### DETAILED DESCRIPTION

The Figures are merely schematic representations and serve only to illustrate examples of the disclosure. Identical or equivalent elements are in principle provided with the same reference signs.

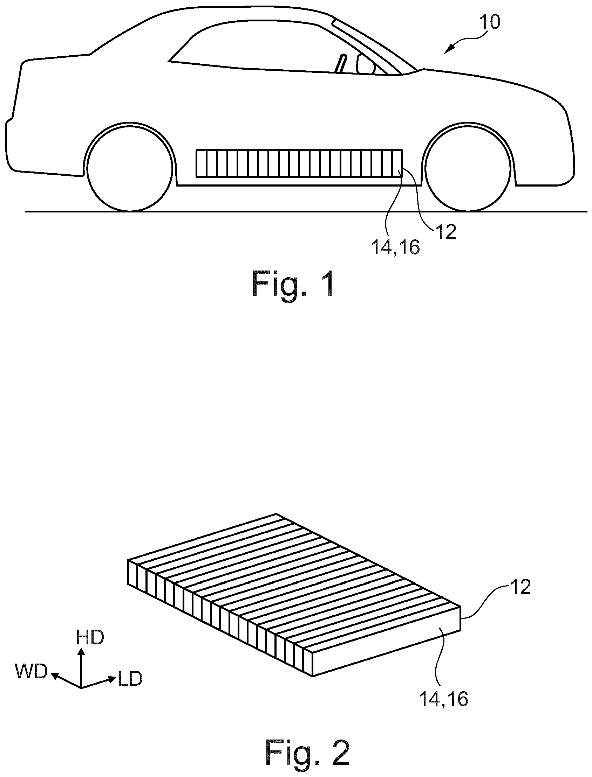

Figure 1 shows a vehicle 10.

The vehicle 10 comprises a battery pack 12. In the present case, the battery pack 12 comprised in the vehicle 10 is a traction battery pack of the vehicle 10.

The battery pack 12 comprises a plurality of battery cells 14.

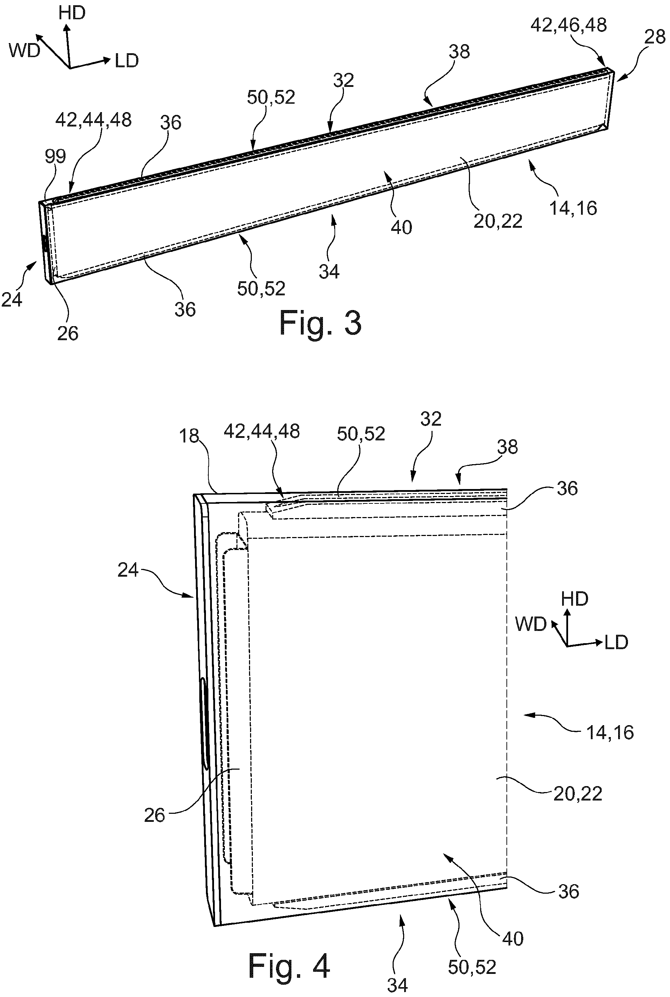

As can be seen from Figures 2 and 3, the battery cells 14 in the battery pack 12 of the vehicle 10 are formed as blade battery cells 16.

Each of the blade cells 16 comprises an enclosure 18 and a chemically active portion 20 arranged inside the enclosure 18 (see Figures 3 and 4).

Additionally, the blade cell 16 comprises an electrolyte filled into the enclosure 18 (not shown).

The enclosure 18 of the blade cell 16 is characterized by a prismatic shape having a substantially rectangular cross-section. The substantially rectangular cross-section comprises two longer sides being opposed to each other and two shorter sides being opposed to each other. The substantially rectangular cross-section is extruded in a length direction LD of the blade cell 16, which is substantially longer than the sides of the substantially rectangular cross-section of the blade cell 16.

For a better understanding, the length direction LD, a width direction WD and a height direction HD is indicated by a coordinate system in Figures 2, 3 and 4. The length directions LD, width directions WD and height directions HD equally apply to all components of the blade cell 16.

It is noted that, in a situation in which the blade cells 16 are mounted in the vehicle 10, the length direction LD of the blade battery cell corresponds to a width direction or lateral direction of the vehicle, wherein the width direction WD of the blade cells 16 corresponds to a length direction or longitudinal direction of the vehicle.

Additionally note that the enclosure 18 of the blade cell 16 is shown in a transparent manner in Figures 3 and 4.

In the present example, the enclosure 18 of the blade cell 16 is made of a metal can, specifically an aluminum can.

The chemically active portion 20 comprises an anode, a cathode and a separator.

The anode, the cathode and the separator are wound to an assembly which is often referred to as a jelly roll 22.

The jelly roll 22 comprises a substantially oblong cross-section. In the example shown in the Figures, the cross-section is rectangular, wherein the corners of the rectangular cross-section are rounded. Alternatively, the jelly roll 22 may comprise a substantially oval cross-section.

The jelly roll 22 is arranged inside the enclosure 18. However, the jelly roll 22 does not directly contact the enclosure 18.

The jelly roll 22 is separated from a first end 24 of the enclosure by a first spacer element 26, which also acts as a current collector from the anode.

Moreover, the jelly roll 22 is separated from a second end 28 of the enclosure 18 by a second spacer element, which acts as a current collector from the cathode.

On a third end 32 and on a fourth end 34 of the enclosure 18 corresponding to the two shorter sides of the substantially rectangular cross-section of the jelly roll 22, the jelly roll 22 is separated from the enclosure 18 by a thermally conductive bridge element 36, which will be described further below.

On a fifth end 38 and on a sixth end 40 of the enclosure 18 corresponding to the two longer sides of the substantially rectangular cross-section of the jelly roll 22, the jelly roll 22 is separated from the enclosure 18 through a polymer film that electrically isolates the jelly roll 22 from the enclosure 18 (not shown).

The thermally conductive bridge element 36 introduced above has the form of an elongated bar.

In the present example, a length of the thermally conductive bridge element 36 in the length direction LD is about 95% of a length of the chemically active portion 20. In preferable embodiments, the length of the thermally conductive bridge element 36 is at least 80% of the length of the chemically active portion 20.

The thermally conductive bridge element 36 may be as wide as a width of the chemically active portion 20 in the width direction WD, wherein the width of the thermally conductive bridge element 36 and the width of the chemically active portion 20 are measured parallel to a shorter side of the substantially rectangular cross-section of the enclosure 18 or the jelly roll 22. In the present example, the width of the thermally conductive bridge element 36 is about 60% of the width of the chemically active portion 20.

The thermally conductive bridge 36 element comprises a mounting portion 42 on its first end 44 and on its second end 46. In the present example, the mounting portion 42 comprises a mounting slope 48. The mounting slope 48 may comprise a convex radius of the thermally conductive bridge element 36. However, in the present example, the mounting slope 48 is essentially planar.

The mounting portion 42 is adjacent to an outer side of the thermally conductive bridge element 36 contacting the enclosure 18, more specifically, an inside or, in other words, an inner circumference of the enclosure 18. Additionally or alternatively, the mounting portion 42 may be adjacent to an outer side of the thermally conductive bridge element 36 contacting the chemically active portion 20.

The thermally conductive bridge element 36 also comprises an electrolyte guiding feature 50. The electrolyte guiding feature 50 serves the purpose of opening a pathway for the electrolyte within the enclosure 18 to flow from a first end 24 of the enclosure 18 to a second end 28 of the enclosure 18. Thus, the electrolyte guiding feature 50 allows a uniform distribution of electrolyte along the length of the chemically active portion 20.

In the present example, the electrolyte guiding feature 50 comprises a groove 52 arranged on the outer side of the thermally conductive bridge element 36 contacting the enclosure 18, more specifically, an inside or, in other words, an inner circumference of the enclosure 18. Additionally or alternatively, the groove 52 may be arranged on the outer side of the thermally conductive bridge element 36 contacting the chemically active portion 20.

The electrolyte guiding feature 50 may also comprise a channel extending through an interior of the thermally conductive bridge element 36. The channel is to be understood as a cavity extending through the thermally conductive bridge element 36, preferably along the length direction LD of the thermally conductive bridge element 36.

In the present example, the thermally conductive bridge element 36 is made from a solid material.

The solid material may comprise a thermally conductive polymer such as polyphenylene sulfide (PPS) or polyether ether ketone (PEEK). These polymers provide good thermal conductivity and excellent chemical resistance against electrolyte inside the battery cell 14.

Additionally or alternatively, the thermally conductive polymer may comprise a compound of a chemically resistant polymer and a filler material of excellent thermal conductivity. Such a polymer may also be called a doped polymer.

Instead of being made from a solid material, the thermally conductive bridge element 36 may comprise a porous material structure.

The porous material structure may be able to absorb and/or hold electrolyte in it like a sponge. The porous material structure may dispense electrolyte to the chemically active portion 20 as electrolyte gets used up in the chemically active portion over time, for example through evaporation.

In case of a porous material structure of the thermally conductive bridge element 36, a dedicated electrolyte guiding feature 50 may not be necessary because the electrolyte can flow and/or defuse through the porous material structure of the thermally conductive bridge element 36, anyway. Due to the porous material structure, electrolyte may flow from a first end 24 of the enclosure 18 to a second end 28 of the enclosure 18. Thus, the porous material structure allows a uniform distribution of electrolyte along the length direction LD of the chemically active portion 20.

The blade cells 16 of Figures 3 and 4, comprise two thermally conductive bridge elements 36 which are formed identically.

The two thermally conductive bridge elements 36 are arranged on opposite sides of the chemically active portion 20. Moreover, the two thermally conductive bridge elements 36 are thermally coupled to the enclosure 18 on the two shorter sides of the substantially rectangular cross-section of the enclosure.

Alternatively, it is conceivable that the blade cell 16 may only comprise one thermally conductive bridge element 36 thermally coupled to the enclosure 18 on one of the two shorter sides of the substantially rectangular cross-section of the enclosure 18.

The outer side of the thermally conductive bridge element 36 contacting the jelly roll 22 is substantially flat. In combination with the substantially oblong cross-section of the jelly roll 22, the contact surface between the thermally conductive bridge element 36 and the jelly roll 22 is maximized.

In case the jelly roll 22 comprises a substantially oval cross-section, the outer side of the thermally conductive bridge element 36 contacting the jelly roll 22 may be substantially concave. In combination with the substantially oval cross-section of the jelly roll 22, which comprises a convex shape, the contact surface between the thermally conductive bridge element 36 and the jelly roll 22 is also maximized.

In the present example, since a length of the thermally conductive bridge element 36 is about 95% of a length of the chemically active portion 20, the thermally conductive bridge element 36 extends over 95% of the length of the chemically active portion 20. In preferable embodiments, the thermally conductive bridge element 36 extends over at least 80% of the length of the chemically active portion 20.

The thermally conductive bridge elements 36 are arranged between the chemically active portion 20 and the enclosure 18. Thus, the thermally conductive bridge elements 36 thermally couple the chemically active portion 20 and the enclosure 18. In other words, heat that is generated inside the chemically active portion 20 during chemical conversion processes while charging or discharging the battery cell 14 is transferred through the thermally conductive bridge element 36 to the enclosure 18 of the battery cell 14. Thus, an effective cooling of the battery cell 14 through a heat transfer from an inside of the battery cell 14 to an outside of the batteries cell 14, and thus to an outside of the battery pack 12, is provided.

In a first alternative, the thermal coupling between the thermally conductive bridge element 36 and the chemically active portion 20 is accomplished by mechanically connecting, e.g. bonding, the thermally conductive bridge element 36 to the chemically active portion 20. The thermal coupling between the thermally conductive bridge element 36 and the enclosure 18 is accomplished by a contact of the thermally conductive bridge element 36 to the enclosure 18.

In a second alternative, the thermal coupling between the thermally conductive bridge element 36 and the enclosure 18 is accomplished by mechanically connecting, e.g. bonding, the thermally conductive bridge element 36 to the enclosure 18. The thermal coupling between the thermally conductive bridge element 36 and the chemically active portion 20 is accomplished by a contact of the thermally conductive bridge element 36 to the chemically active portion 20.

In a third alternative, the thermal coupling between the thermally conductive bridge element 36 and the chemically active portion 20 as well as the thermal coupling between the thermally conductive bridge element 36 and the enclosure 18 is accomplished by mechanically connecting, e.g. bonding, the thermally conductive bridge element 36 to both the chemically active portion 20 and the enclosure 18.

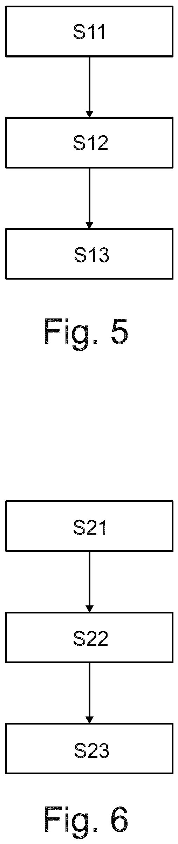

Figure 5 shows steps of a first alternative of a method for manufacturing the battery cell 14 for the battery pack 12 of the vehicle 10.

In a first step S11, the chemically active portion 20 is provided.

In a second step S12, the thermally conductive bridge elements 36 are mechanically connected, e.g. bonded, to the chemically active portion 20.

In a subsequent third step S13, the chemically active portion 20 together with the thermally conductive bridge elements 36 are arranged inside the enclosure 18. In other words, the chemically active portion 20 together with the thermally conductive bridge elements 36 are slid into the enclosure 18.

In step S13 of the first alternative of the method, the mounting slopes 48 adjacent to the outer sides of the thermally conductive bridge elements 36 contacting the enclosure 18, more specifically, an inside or, in other words, an inner circumference of the enclosure 18, facilitate the assembly process. This is because the thermally conductive bridge elements 36 are clamped in between the chemically active portion 36 and the enclosure 18. Due to tight tolerances involved, the mounting slopes 48 serve as a guide for sliding the chemically active portion 20 together with the thermally conductive bridge elements 36 into the enclosure 18.

Figure 6 shows steps of a second alternative of the method for manufacturing the battery cell 14 for the battery pack 12 of the vehicle 10.

In a first step S21, the enclosure 18 is provided.

In a second step S22, the thermally conductive bridge elements 36 are mechanically connected, i.e. bonded, to the enclosure 18.

In a subsequent third step S23, the chemically active portion 20 is arranged inside the enclosure 18. In other words, the chemically active portion 20 is slid into the enclosure 18.

In step S23 of the second alternative of the method, the mounting slopes 48 adjacent to the outer sides of the thermally conductive bridge elements 36 contacting the chemically active portion 20 facilitate the assembly process. Again, this is because the thermally conductive bridge elements 36 are clamped in between the chemically active portion 20 and the enclosure 18. Due to tight tolerances involved, the mounting slopes 48 serve as a guide for sliding the thermally conductive bridge elements 36 into the enclosure 18.

In a third alternative of the method for manufacturing the battery cell 14 for the battery pack 12 of the vehicle 10, which is not explicitly shown in the Figures, the enclosure 18 is provided in a first step S31.

In a second step S32 of the third alternative, the chemically active portion 20 is arranged inside the enclosure 18. In other words, the chemically active portion 20 is slid into the enclosure 18.

In a subsequent third step S33 of the third alternative, the thermally conductive bridge elements 36 are arranged in gaps between the chemically active portion 20 and the enclosure 18. In other words, the thermally conductive bridge elements 36 are slid into the gaps between the chemically active portion 20 and the enclosure 18.

In step S33 of the third alternative of the method, mounting slopes 48 adjacent to the outer side of the thermally conductive bridge elements 36 contacting the chemically active portion 20 and adjacent to the outer side of the thermally conductive bridge element 36 contacting the enclosure 18 facilitate the assembly process. Again, this is because the thermally conductive bridge elements 36 are clamped in between the chemically active portion 20 and the enclosure 18. Due to tight tolerances involved, the mounting slopes 48 serve as a guide for sliding the thermally conductive bridge elements 36 in between the chemically active portion 20 and the enclosure 18.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: battery pack
- 14: battery cell
- 16: blade cell
- 18: enclosure
- 20: chemically active portion
- 22: jelly roll
- 24: first end of enclosure
- 26: first spacer element
- 28: second end of enclosure
- 32: third end of enclosure
- 34: fourth end of enclosure
- 36: thermally conductive bridge element
- 38: fifth end of enclosure
- 40: sixth end of enclosure
- 42: mounting portion
- 44: first end of thermally conductive bridge element
- 46: second end of thermally conductive bridge element
- 48: mounting slope
- 50: electrolyte guiding feature
- 52: groove

- LD: length direction
- WD: width direction
- HD: height direction

## Claims

1. A battery cell (14) for a battery pack (12) of a vehicle (10), the battery cell (14) comprising:
- a chemically active portion (20) comprising an anode, a cathode, and a separator,
- an enclosure (18), wherein the chemically active portion (20) is arranged inside the enclosure (18), and
- at least one thermally conductive bridge element (36) thermally coupled to the chemically active portion (20) and the enclosure (18) such that the thermally conductive bridge element (36) may transfer heat from the chemically active portion (20) to the enclosure (18).

2. The battery cell (14) of claim 1, wherein the at least one thermally conductive bridge element (36) is mechanically connected to the chemically active portion (20) and/or to the enclosure (18).

3. The battery cell (14) of claim 1 or 2, wherein the thermally conductive bridge element (36) has the form of an elongated bar.

4. The battery cell (14) of any one of the preceding claims, wherein the thermally conductive bridge element (36) extends over at least 80% of a length of the chemically active portion (20).

5. The battery cell (14) of any one of the preceding claims, wherein a surface of the thermally conductive bridge element (36) contacting the chemically active portion (20) is substantially flat or concave.

6. The battery cell (14) of any one of the preceding claims, wherein the enclosure (18) has a prismatic shape having a substantially rectangular cross-section, wherein the substantially rectangular cross-section has two longer sides being opposed to each other and two shorter sides being opposed to each other, and wherein the at least one thermally conductive bridge element (36) is thermally coupled to the enclosure (18) on at least one of the two shorter sides of the substantially rectangular cross-section.

7. The battery cell (14) of any one of the preceding claims, wherein the battery cell (14) comprises at least two thermally conductive bridge elements (36) each thermally conductive bridge element (36) thermally coupled to the enclosure (18) and to the chemically active portion (20).

8. The battery cell (14) of claim 7, wherein the at least two thermally conductive bridge elements (36) are arranged at opposite ends of the chemically active portion (20).

9. The battery cell (14) of any one of the preceding claims, wherein the at least one thermally conductive bridge element (36) comprises a mounting slope (48) on at least one end (44, 46).

10. The battery cell (14) of any one of the preceding claims, wherein the at least one thermally conductive bridge element (36) comprises an electrolyte guiding feature (50).

11. The battery cell of claim 10, wherein the electrolyte guiding feature (50) comprises a groove (52) arranged on an outer side of the thermally conductive bridge element (36) and/or a channel extending through an interior of the thermally conductive bridge element (36).

12. The battery cell (14) of any one of the preceding claims, wherein the thermally conductive bridge element (36) comprises a porous structure configured to hold and/or guide an electrolyte.

13. The battery cell (14) of any one of the preceding claims, wherein the at least one thermally conductive bridge element (36) comprises a thermally conductive polymer material.

14. A vehicle (10) comprising a battery cell (14) of any one of the preceding claims.

15. A method for manufacturing a battery cell (14) of any one of claims 1 to 12 for a battery pack (12) of a vehicle (10), the method comprising:
- providing the chemically active portion (20), mechanically connecting the at least one thermally conductive bridge element (36) to the chemically active portion (20) and, subsequently, arranging the chemically active portion (20) together with the at least one thermally conductive bridge element (36) in the enclosure (18), or
- providing the enclosure (18), mechanically connecting the at least one thermally conductive bridge element (36) to the enclosure (18) and, subsequently, arranging the chemically active portion (20) in the enclosure (18), or
- providing the enclosure (18), arranging the chemically active portion (20) in the enclosure (18), and, subsequently, inserting the at least one thermally conductive bridge element (36) in a gap between the enclosure (18) and the chemically active portion (20).
